# EUROPEAN PATENT APPLICATION

(11) **EP 4 815 526 A1**
(43) Date of publication of application: **30.09.2026**
(21) Application number: 24916756.0
(22) Date of filing: 26.12.2024
(51) Int. Cl.: H04W 8/02

(54) **WI-FI ROAMING CONTROL METHOD, AND ELECTRONIC DEVICE AND COMPUTER-READABLE STORAGE MEDIUM**

(30) Priority: 10.01.2024 CN 202410046081
(71) Applicant: Honor Device Co., Ltd., Shenzhen, Guangdong 518040 (CN)
(72) Inventor: ZHAO, Shuang, Shenzhen, Guangdong 518040 (CN); ZHI, Gang, Shenzhen, Guangdong 518040 (CN); YANG, Peng, Shenzhen, Guangdong 518040 (CN); SHEN, Ao, Shenzhen, Guangdong 518040 (CN); HOU, Tianyi, Shenzhen, Guangdong 518040 (CN)
(74) Representative: Isarpatent
(86) International application number: PCT/CN2024/142922
(87) International publication number: WO 2025/148709

(57) **Abstract**

This application discloses a method for controlling Wi-Fi roaming, an electronic device, and a computer-readable storage medium, and relates to the field of terminal technologies. Some roaming policies in a plurality of Wi-Fi roaming policies are forbidden to reduce the quantity of times of Wi-Fi roaming, to implement escape from a Wi-Fi roaming ping-pong scenario, thereby ensuring Internet access experience of a user. The method may be applied to an electronic device supporting a plurality of Wi-Fi roaming policies, where the electronic device is connected to a Wi-Fi network. In a specific solution, the electronic device performs Wi-Fi roaming between two different BSSIDs, and executes an escape policy in response to that Wi-Fi roaming performed by the electronic device meets a preset condition. The escape policy includes forbidding the electronic device from performing Wi-Fi roaming based on a first roaming policy.

## Description

This application claims priority to Chinese Patent Application No. 202410046081.2, filed with the China National Intellectual Property Administration on January 10, 2024 and entitled "METHOD FOR CONTROLLING WI-FI ROAMING, ELECTRONIC DEVICE, AND COMPUTER-READABLE STORAGE MEDIUM", which is incorporated herein by reference in its entirety.

### TECHNICAL FIELD

This application relates to the field of terminal technologies, and in particular, to a method for controlling Wi-Fi roaming, an electronic device, and a computer-readable storage medium.

### BACKGROUND

In a communication system, a router can provide shared Internet access for a plurality of electronic devices of a user. With the development of technologies, a router having two or more different basic service set identifiers (Basic Service Set ID, BSSID) may be used to ensure Internet access experience of a user. In other words, Wi-Fi roaming may be performed between different BSSIDs to ensure Internet access experience of a user. However, if Wi-Fi roaming frequently occurs, the electronic device is in a Wi-Fi roaming ping-pong scenario, resulting in poor Internet access experience of a user.

### SUMMARY

Based on this, this application provides a method for controlling Wi-Fi roaming, an electronic device, and a computer-readable storage medium. This avoids frequent occurrence of Wi-Fi roaming, to ensure Internet access experience of a user.

To achieve the foregoing objective, embodiments of this application use the following technical solutions.

According to a first aspect, this application provides a method for controlling Wi-Fi roaming, where the method is applied to an electronic device supporting a plurality of Wi-Fi roaming policies, and the electronic device is connected to a Wi-Fi network. In this method, the electronic device performs Wi-Fi roaming between two different BSSIDs, and executes an escape policy response to that Wi-Fi roaming performed by the electronic device meets a preset condition. The escape policy includes forbidding some roaming policies in the plurality of Wi-Fi roaming policies supported by the electronic device, for example, the forbidden roaming policy is referred to as a first roaming policy. In other words, the escape policy is forbidding the electronic device from performing Wi-Fi roaming based on the first roaming policy. The electronic device may normally perform Wi-Fi roaming based on a roaming policy other than the first roaming policy.

When Wi-Fi roaming performed by the electronic device meets a preset condition, it may be considered that the electronic device is in a Wi-Fi roaming ping-pong scenario. In the foregoing technical solution, when the electronic device is in the Wi-Fi roaming ping-pong scenario, the electronic device is forbidden from performing Wi-Fi roaming based on some roaming policies in the plurality of supported Wi-Fi roaming policies, to reduce the occurrence frequency of Wi-Fi roaming, and implement escape from the Wi-Fi roaming ping-pong scenario, thereby ensuring Internet access experience of the user.

In an implementation of the first aspect, executing the escape policy may be implemented in specific escape duration. In other words, the electronic device may specifically execute the escape policy in escape duration, for example, first escape duration. This prevents inhibition of some policies for a long time, to prevent the problem that Internet access experience of the user is affected.

In a possible implementation of the first aspect, the method may further include: In some cases, execution of the escape policy may be stopped. For example, a case in which execution of the escape policy is stopped may be that the first escape duration expires, or may be that the first escape duration does not expire but an abnormal event is detected. When execution of the escape policy is stopped, the electronic device is allowed to perform Wi-Fi roaming based on the first roaming policy. The abnormal event may be that the electronic device disconnects a Wi-Fi connection, and/or signal quality of the Wi-Fi network to which the electronic device is connected is continuously less than a first threshold in preset duration. In this way, when the escape duration expires or an abnormal event occurs, normal trigger of subsequent Wi-Fi roaming is ensured.

In an implementation of the first aspect, the first escape duration may be determined based on the historical escape information. The historical escape information may include a reason why execution of the escape policy is stopped last time and/or a timestamp at which execution of the escape policy is stopped last time. Specifically, the historical escape information may be obtained. In other words, the reason why execution of the escape policy is stopped last time and/or the timestamp at which execution of the escape policy is stopped last time are/is obtained. Then the first escape duration is obtained based on the obtained historical escape information, to determine time at which the escape policy is executed.

When the reason why execution of the escape policy is stopped last time is that second escape duration expires, and a time difference between the timestamp at which execution of the escape policy is stopped last time and a current moment is less than a second threshold, the first escape duration is first duration. When the reason why execution of the escape policy is stopped last time is that the second escape duration expires, and the time difference between the timestamp at which execution of the escape policy is stopped last time and the current moment is greater than the second threshold, or when the reason why execution of the escape policy is stopped last time is abnormal stop, the first escape duration is second duration. The second escape duration is duration in which the escape policy is executed last time, and the first duration is greater than the second duration. In other words, different historical escape information corresponds to different escape duration at this time. Based on the reason why execution of the escape policy is stopped last time and/or the timestamp at which execution of the escape policy is stopped last time, escape duration at this time may be selected step by step, to enable inhibition to be more proper, thereby ensuring Internet access experience of the user.

In an implementation of the first aspect, the preset condition may be one or more in the foregoing conditions: a quantity of times of Wi-Fi roaming is greater than a third threshold; and a time difference between first Wi-Fi roaming and last Wi-Fi roaming is less than a fourth threshold. Whether the electronic device is in the Wi-Fi roaming ping-pong scenario can be accurately determined through setting of the foregoing preset condition, to accurately decide whether to execute the escape policy, thereby ensuring Internet access experience of the user.

In an implementation of the first aspect, before the escape policy is executed, the plurality of Wi-Fi roaming policies supported by the electronic device may be further obtained, and the plurality of Wi-Fi roaming policies are divided into a first roaming policy and a second roaming policy. The first roaming policy is some roaming policies in the supported plurality of Wi-Fi roaming policies, namely, roaming policies that can be forbidden when use of the Wi-Fi network to access the Internet by the user is not affected. The second roaming policy may be a roaming policy other than the first roaming policy, that is, a roaming policy that cannot be forbidden. Some roaming policies are selected from the supported roaming policies as the inhibited roaming policies, to ensure the Internet access experience of the user to the greatest extent.

The first roaming policy includes one or more of the following policies: a bit error rate is less than a threshold, a priority of a first band is higher than a priority of a second band, acknowledge characters ACK replied by a network device are not received, load is greater than a threshold, and an amount of transmitted data reaches a threshold. The second roaming policy includes one or more of the following policies: a transmission rate is less than a threshold, a beacon (BEACON) frame of the network device is not received, a signal of the connected Wi-Fi network is less than a threshold, and the Wi-Fi network to which the electronic device is actively reconnected receives a passive DEAUTH instruction.

In an implementation of the first aspect, the escape policy may further include: skipping responding to a received switching request caused by a preset reason; and the preset reason includes: transition management BTM. Wi-Fi roaming caused by BTM may be used as an escape policy in the Wi-Fi roaming ping-pong scenario for inhibition, to implement escape in the Wi-Fi roaming ping-pong scenario.

According to a second aspect, this application provides an apparatus for controlling Wi-Fi roaming, where the apparatus has a function of implementing behaviors of the electronic device in the method of the first aspect. The function may be implemented by hardware, or may be implemented by hardware executing corresponding software. The hardware or the software includes one or more modules corresponding to the foregoing functions, for example, an obtaining unit or module, a monitoring unit or module, and an execution unit or module.

According to a third aspect, a computer device such as an electronic device is provided. The computer device may include: a memory, a processor, a wireless communication module, and computer instructions stored in the memory. When the computer instructions are executed by the processor, the method for controlling Wi-Fi roaming in any one of the first aspect and the implementations of the first aspect is implemented.

According to a fourth aspect, a computer-readable storage medium is provided. The computer-readable storage medium stores computer instructions. When the computer instructions are executed by a processor, the method for controlling Wi-Fi roaming in any one of the first aspect and the implementations of the first aspect is implemented.

According to a fifth aspect, a computer program product including instructions is provided, including computer instructions. When the computer instructions are executed by a processor, the method for controlling Wi-Fi roaming in any one of the first aspect and the implementations of the first aspect is implemented.

According to a sixth aspect, an embodiment of this application provides a chip system. The chip system includes a processor, configured to invoke a computer program in a memory, to perform the method for controlling Wi-Fi roaming in any one of the first aspect and the implementations of the first aspect.

It may be understood that, for beneficial effects that can be achieved by the apparatus in the second aspect, the electronic device in the third aspect, the computer-readable storage medium in the fourth aspect, the computer program product in the fifth aspect, and the chip system in the sixth aspect, refer to the beneficial effects of any one of the first aspect and the implementations of the first aspect. Details are not described herein again.

### BRIEF DESCRIPTION OF DRAWINGS

FIG. 1 is a diagram of a scenario of Wi-Fi roaming of an electronic device in a related technology;
FIG. 2 is a diagram of a structure of an electronic device according to an embodiment of this application;
FIG. 3 is a schematic flowchart 1 of a method for controlling Wi-Fi roaming according to an embodiment of this application;
FIG. 4 is a diagram 1 of a method for controlling Wi-Fi roaming according to an embodiment of this application;
FIG. 5 is a diagram 2 of a method for controlling Wi-Fi roaming according to an embodiment of this application;
FIG. 6 is a diagram 3 of a method for controlling Wi-Fi roaming according to an embodiment of this application;
FIG. 7 is a diagram 4 of a method for controlling Wi-Fi roaming according to an embodiment of this application;
FIG. 8 is a schematic flowchart 2 of a method for controlling Wi-Fi roaming according to an embodiment of this application;
FIG. 9A and FIG. 9B are a schematic flowchart 3 of a method for controlling Wi-Fi roaming according to an embodiment of this application; and
FIG. 10 is a diagram of a structure of a chip system according to an embodiment of this application.

### DESCRIPTION OF EMBODIMENTS

In the descriptions of this application, unless otherwise stated, the term "and/or" in this application describes only an association relationship between associated objects, and indicates that three relationships may exist. For example, A and/or B may represent three cases: Only A exists, both A and B exist, and only B exists. A and B may be singular or plural.

In description of this application, the term "a plurality of" means two or more than two unless otherwise specified. "At least one of the following items (pieces)" or a similar expression thereof means any combination of these items, including any combination of singular items (pieces) or plural items (pieces). For example, at least one of a, b, and c may represent a, b, c, a-b, a-c, b-c, or a-b-c, where a, b, and c may be singular or plural.

For ease of clearly describing the technical solutions in embodiments of this application, in embodiments of this application, words such as "first" and "second" are used to distinguish same items or similar items whose functions and roles are basically the same. A person skilled in the art may understand that the terms such as "first" and "second" do not limit a quantity or an execution sequence, and the terms such as "first" and "second" do not indicate a definite difference.

In embodiments of this application, the word "exemplary", "for example", or the like represents giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present related concepts in a specific manner for ease of understanding.

First, some terms in embodiments of this application are first explained and described, to facilitate understanding of a person skilled in the art.

BSSID: BSSID is a basic service set identifier in a wireless local area network. BSSID is a unique identifier used to identify each wireless access point in a wireless local area network, and is similar to a media access control (Media Access Control, MAC) address. Through the BSSID, a wireless client (such as the electronic device in this application) may determine an identity of a wireless access point to which the wireless client is connected, to facilitate connection establishment. For a scenario in which the wireless access point is a router, one router may have only one BSSID. For example, a router supporting only a single band (2.4G/5G band) has only one BSSID. One router may alternatively have a plurality of BSSIDs. For example, a dual-band unified router has two different BSSIDs, which respectively correspond to the 5G band and the 2.4G band that are supported by the router. Different routers have different BSSIDs.

A ping-pong scenario may also be referred to as ping-pong effect, and generally means switching back and forth between two different states. In embodiments of this application, a ping-pong scenario of Wi-Fi roaming may mean that the electronic device performs Wi-Fi roaming between two different BSSIDs. This may be simply understood as that the electronic device switches back and forth between the two different BSSIDs. The two different BSSIDs may belong to a same router, and the two BSSIDs correspond to a same Wi-Fi network. The two different BSSIDs may alternatively belong to different routers, and names (for example, a service set identifier (Service Set ID, SSID)) and passwords of Wi-Fi networks corresponding to the two BSSIDs are the same.

The following describes technical solutions in embodiments of this application with reference to the accompanying drawings in the embodiments of this application.

In addition to accessing the Internet through traffic, the current electronic device may also implement an Internet access function by using a Wi-Fi network. Wi-Fi Internet access may be implemented based on interaction between the router and the electronic device. To ensure Internet access experience of a user, in one scenario, a dual-band unified router may be deployed. For example, a router that supports both the 5G band and the 2.4G band is deployed. The router has two BSSIDs, which respectively correspond to the 5G band and the 2.4G band that are supported by the router. The electronic device may select one of the BSSIDs to access the Wi-Fi network. When the two BSSIDs correspond to a same Wi-Fi network, if the currently selected BSSID cannot provide good Internet access experience for the user, the electronic device may select the other BSSID to access the Wi-Fi network. In other words, the electronic device may perform Wi-Fi roaming between the two different BSSIDs to ensure Internet access experience of the user. In another scenario, two single-band routers may be deployed. The two single-band routers each correspond to one BSSID, and different routers correspond to different BSSIDs. Names and passwords of Wi-Fi networks corresponding to the two BSSIDs are the same. Similar to the previous scenario, the electronic device may alternatively perform Wi-Fi roaming between the two different BSSIDs, to ensure Internet access experience of the user.

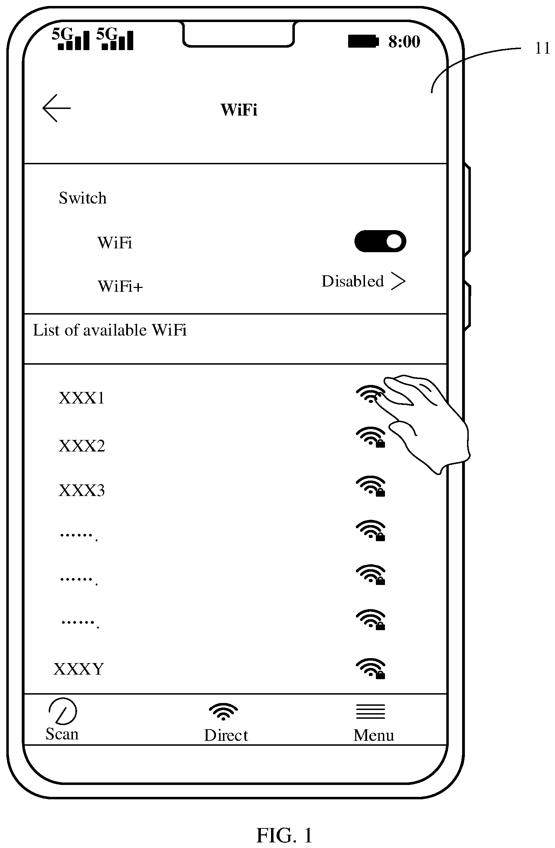

For example, FIG. 1 shows an example in which the electronic device is a mobile phone. When the user needs to use the Wi-Fi function to access the Internet, the user may enable a Wi-Fi function on the mobile phone and then select a Wi-Fi network to which the mobile phone needs to be connected. For example, after the mobile phone receives a user operation of selecting an identifier of a Wi-Fi network on an interface 11 shown in FIG. 1, the mobile phone may be connected to the Wi-Fi network selected by the user, for the user to access the Internet. In the foregoing two scenarios, in response to the user operation, the phone may select one of the BSSIDs to establish a connection. Subsequently, if the currently connected BSSID cannot provide good Internet access experience for the user, the phone may select the other BSSID for connection. In other words, Wi-Fi roaming occurs between different BSSIDs. The user is not aware of the Wi-Fi roaming process that occurs between the two BSSIDs.

The electronic device may decide, based on a configured Wi-Fi roaming policy, whether Wi-Fi roaming needs to be performed. However, the electronic device generally supports a plurality of Wi-Fi roaming policies. This may lead to frequent Wi-Fi roaming that occurs on the electronic device. For example, an example in which the two BSSIDs in the foregoing scenario are respectively a BSSID 1 and a BSSID 2. The electronic device may frequently switch from the BSSID 1 to the BSSID 2 and then back from the BSSID 2 to the BSSID 1 due to different configured Wi-Fi roaming policies. As a result, the electronic device is in a Wi-Fi roaming ping-pong scenario, affecting Internet access experience of the user.

To enhance Internet access experience of the user, in related technologies, when the electronic device recognizes that the current scenario is a Wi-Fi roaming ping-pong scenario, the electronic device adjusts switching parameters to delay occurrence of Wi-Fi roaming. In other words, in the foregoing technology, the electronic device is not allowed to perform Wi-Fi roaming within the delay time, even if the currently connected Wi-Fi network is poor. In this way, properness of Wi-Fi network use cannot be ensured, and poor Internet access experience of the user is still caused.

To resolve the foregoing problem, an embodiment of this application provides a method for controlling Wi-Fi roaming. When a current scenario is recognized as a Wi-Fi roaming ping-pong scenario, an escape policy may be executed to reduce the occurrence frequency of Wi-Fi roaming, thereby implementing escape from the Wi-Fi roaming ping-pong scenario. This maximizes the properness of Wi-Fi network use and ensures Internet access experience of the user.

The solutions provided in this embodiment of this application may be applied to the electronic device. For example, the electronic device may be a device having a wireless network access function, such as a mobile phone, a tablet computer, a smartwatch, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), and an augmented reality (augmented reality, AR)/virtual reality (virtual reality, VR) device. A specific form of the electronic device is not specifically limited in embodiments of this application.

In some examples, the method for controlling Wi-Fi roaming provided in this embodiment of this application may be applied to a scenario in which Wi-Fi roaming may occur. For example, the scenario may be a scenario in which a dual-band unified router is deployed. In this scenario, the two BSSIDs correspond to a same Wi-Fi network. For another example, the scenario may be a scenario in which two single-band routers are deployed. In this scenario, two BSSIDs exist, and names and passwords of Wi-Fi networks corresponding to the two BSSIDs are the same.

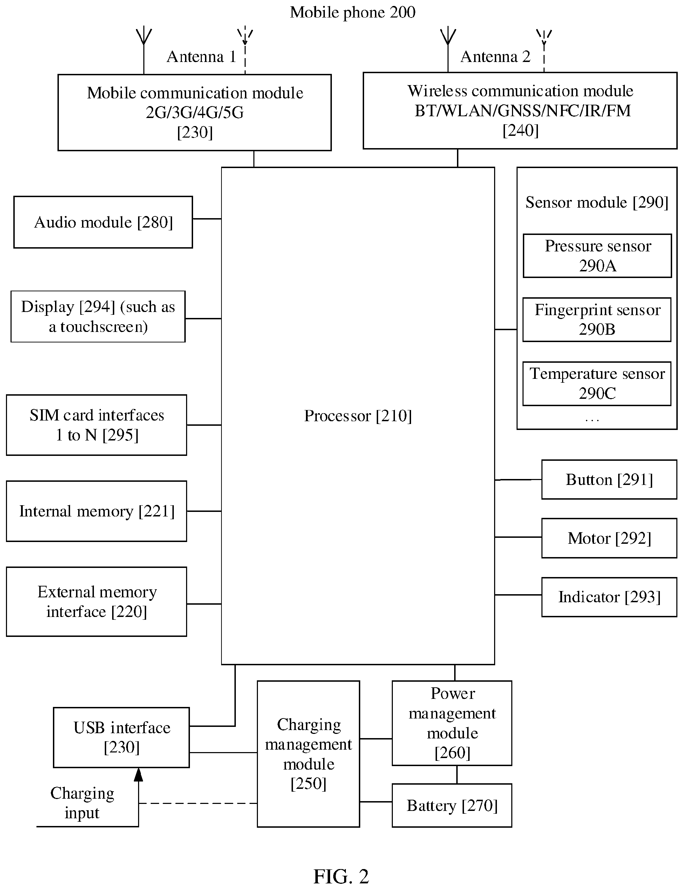

For example, a mobile phone 200 is used as an example of the foregoing electronic device. FIG. 2 is a diagram of a structure of the mobile phone 200. As shown in FIG. 2, the mobile phone 200 may include a processor 210, an external memory interface 220, an internal memory 221, a mobile communication module 230, a wireless communication module 240, a charging management module 250, a power management module 260, a battery 270, an antenna 1, an antenna 2, an audio module 280, a sensor module 290, a button 291, a motor 292, an indicator 293, a display 294, a subscriber identity module (subscriber identification module, SIM) card interface 295, and the like.

It may be understood that the structure shown in this embodiment of the present invention does not constitute a specific limitation on the mobile phone 200. In some other embodiments of this application, the mobile phone 200 may include more or fewer components than those shown in the figure, or some components may be combined, or some components may be split, or there may be a different component layout. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 210, and is configured to store instructions and data. In some embodiments, the memory in processor 210 is a cache memory. The memory may store instructions or data that have just been used or recycled by the processor 210. If the processor 210 needs to use the instruction or the data again, the processor may directly invoke the instruction or the data from the memory. This avoids repeated access, reduces waiting time of the processor 210, and therefore improves system efficiency. In some embodiments, the processor 210 may include one or more interfaces. In this embodiment of this application, the processor 210 may be configured to execute an escape policy when determining that a current scenario is a Wi-Fi roaming ping-pong scenario. For example, the mobile phone 200 is forbidden from performing Wi-Fi roaming based on a first roaming policy. For another example, the mobile phone 200 does not respond to a switching request caused by a preset reason.

The charging management module 250 is configured to receive a charging input from a charger. The charger may be a wireless charger or a wired charger. The charging management module 250 may supply power to the mobile phone 200 by using the power management module 260 while charging the battery 270.

The power management module 260 is configured to connect to the battery 270. The power management module 260 receives an input from the battery 270 and/or the charging management module 250, and supplies power to the processor 210, the internal memory 221, the display 294, the wireless communication module 240 (for example, a Wi-Fi chip, and optionally, the Wi-Fi chip supports a plurality of Wi-Fi roaming policies), and the like. The power management module 260 may be further configured to monitor parameters such as a battery capacity, a battery cycle count, and a battery health status (electric leakage or impedance). In some other embodiments, the power management module 260 may alternatively be disposed in the processor 210. In some other embodiments, the power management module 260 and the charging management module 250 may alternatively be configured in a same device.

A wireless communication function of the mobile phone 200 may be implemented through the antenna 1, the antenna 2, the mobile communication module 230, the wireless communication module 240, the modem processor, the baseband processor, and the like.

The antenna 1 and the antenna 2 are configured to transmit and receive an electromagnetic wave signal. Each antenna in the mobile phone 200 may be configured to cover one or more communication bands. Different antennas may be further reused, to improve antenna utilization. For example, the antenna 1 may be reused as a diversity antenna of a wireless local area network. In some other embodiments, an antenna may be used in combination with a tuning switch.

The mobile communication module 230 may provide a solution applied to the mobile phone 200 for wireless communication including 2G/3G/4G/5G wireless communication. The mobile communication module 230 may include at least one filter, a switch, a power amplifier, a low noise amplifier (low noise amplifier, LNA), and the like. The mobile communication module 230 may receive an electromagnetic wave through the antenna 1, perform processing such as filtering or amplification on the received electromagnetic wave, and transmit the electromagnetic wave to the modem processor for demodulation.

The wireless communication module 240 may provide a solution applied to the mobile phone 200 for wireless communication including wireless local area network (wireless local area networks, WLAN) (for example, a Wi-Fi network), Bluetooth (blue tooth, BT), global navigation satellite system (global navigation satellite system, GNSS), frequency modulation (frequency modulation, FM), near field communication (near field communication, NFC), and infrared technologies (infrared, IR). In some embodiments of this application, when the wireless communication module 240 provides a WLAN solution on the mobile phone 200, the wireless communication module 240 may also include the Wi-Fi chip in this application.

In some embodiments, in the mobile phone 200, the antenna 1 is coupled to the mobile communication module 230, and the antenna 2 is coupled to the wireless communication module 240, so that the mobile phone 200 can communicate with a network and another device by using a wireless communication technology.

The mobile phone 200 implements a display function by using the GPU, the display 294, the application processor, and the like. The GPU is an image processing microprocessor and is connected to the display 294 and the application processor. The GPU is configured to perform mathematical and geometric computation, and render an image. The processor 210 may include one or more GPUs that execute program instructions to generate or change display information.

The display 294 is configured to display an image, a video, and the like. The display 294 includes a display panel. For example, the display 294 may be a touchscreen.

The external memory interface 220 may be configured to connect to an external storage card, for example, a Micro SD card, to extend a storage capability of the mobile phone 200.

The internal memory 221 may be configured to store computer executable program code, and the executable program code includes instructions. The internal memory 221 may include a program storage area and a data storage area. The program storage area may store an operating system, an application required by at least one function (for example, a sound playing function or an image playing function), and the like. The data storage area may store data (such as audio data and a phone book) created during use of the mobile phone 200, and the like. In addition, the internal memory 221 may include a high-speed random access memory, or may include a non-volatile memory, for example, at least one magnetic disk storage device, a flash memory device, or a universal flash storage (universal flash storage, UFS). The processor 210 runs instructions stored in the internal memory 221 and/or instructions stored in the memory disposed in the processor 210, to perform various functions and data processing of the mobile phone 200.

The audio module 280 is configured to convert digital audio information into an analog audio signal for output, and is also configured to convert an analog audio input into a digital audio signal. The audio module 280 may be further configured to encode and decode an audio signal. In some embodiments, the audio module 280 may be disposed in the processor 210, or some functional modules of the audio module 280 may be disposed in the processor 210.

The sensor module 290 may include a pressure sensor 290A, a fingerprint sensor 290B, a temperature sensor 290C, a touch sensor 290D, and the like.

The pressure sensor 290A is configured to sense a pressure signal, and may convert the pressure signal into an electrical signal. In some embodiments, the pressure sensor 290A may be disposed on the display 294. There are many types of pressure sensors 290A, such as a resistive pressure sensor, an inductive pressure sensor, and a capacitive pressure sensor. The capacitive pressure sensor may include at least two parallel plates made of conductive materials. When a force is applied to the pressure sensor 290A, capacitance between electrodes changes. The mobile phone 200 determines pressure intensity based on a capacitance change. When a touch operation is performed on the display 294, the mobile phone 200 detects strength of the touch operation through the pressure sensor 290A. The mobile phone 200 may also calculate a touch position based on a detection signal of the pressure sensor 290A.

The fingerprint sensor 290B is configured to collect a fingerprint. The mobile phone 200 may implement, by using an acquired fingerprint characteristic, fingerprint unlocking, accessing an application lock, fingerprint photographing, answering an incoming call by using a fingerprint, and the like.

The temperature sensor 290C is configured to detect a temperature. In some embodiments, the mobile phone 200 executes a temperature processing policy based on the temperature detected by the temperature sensor 290C. For example, when the temperature reported by the temperature sensor 290C exceeds a threshold, the mobile phone 200 reduces performance of a processor near the temperature sensor 290C, to reduce power consumption and implement thermal protection. In some other embodiments, when the temperature is lower than another threshold, the mobile phone 200 heats the battery 270, to avoid an abnormal shutdown of the mobile phone 200 caused by a low temperature. In some other embodiments, when the temperature is lower than still another threshold, the mobile phone 200 boosts an output voltage of the battery 270, to avoid an abnormal shutdown caused by a low temperature.

The touch sensor 290D is also referred to as a "touch component". The touch sensor 290D may be disposed on the display 294. A touchscreen includes the touch sensor 290D and the display 294, and is also referred to as a "touch screen". The touch sensor 290D is configured to detect a touch operation performed on or near the touch sensor. The touch sensor may transfer the detected touch operation to the application processor to determine a type of the touch event. A visual output related to the touch operation may be provided through the display 294. In some other embodiments, the touch sensor 290D may also be disposed on a surface of the mobile phone 200 at a location different from that of the display 294.

The button 291 includes a power button, a volume button, and the like. The button 291 may be a mechanical button, or a touch-type button. The mobile phone 200 may receive a key input, and generate a key signal input related to user settings and function control of the mobile phone 200.

The motor 292 may generate a vibration prompt. The motor 292 may be configured to provide an incoming call vibration prompt, or may be configured to provide a touch vibration feedback. For example, touch operations performed on different applications (for example, photographing and audio playing) may correspond to different vibration feedback effects. The motor 292 may also correspond to different vibration feedback effects for touch operations performed on different areas of the display 294. Different application scenarios (for example, a time reminder, information receiving, an alarm clock, and a game) may also correspond to different vibration feedback effects. Customization of a touch vibration feedback effect may also be supported.

The indicator 293 may be an indicator light, and may indicate a charging status and a power level change, or may indicate a message, a missed call, a notification, and the like.

The SIM card interface 295 is configured to connect to a SIM card. The SIM card may be inserted into the SIM card interface 295 or plugged from the SIM card interface 295, to come into contact with or be separated from the mobile phone 200.

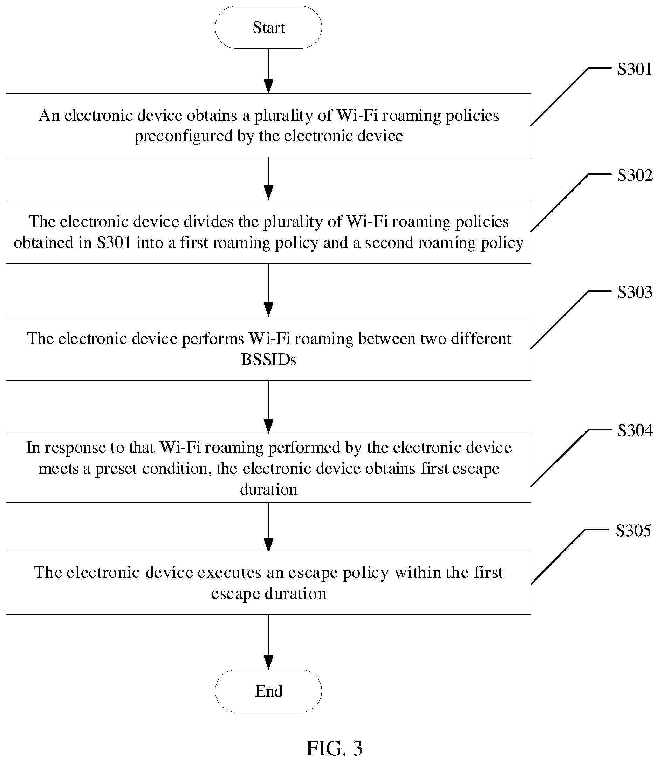

The following describes, with reference to FIG. 3, a specific procedure in which the electronic device implements the method for controlling Wi-Fi roaming.

FIG. 3 is a schematic flowchart of a method for controlling Wi-Fi roaming according to an embodiment of this application. The method may be applied to an electronic device, and the electronic device is connected to a Wi-Fi network. As shown in FIG. 3, the method includes S301 to S304.

S301: The electronic device obtains a plurality of Wi-Fi roaming policies preconfigured by the electronic device.

In some embodiments, to provide good Wi-Fi Internet access experience for a user, generally, a chip manufacturer preconfigures Wi-Fi roaming policies in a Wi-Fi chip, so that when a currently connected Wi-Fi network cannot provide good Wi-Fi Internet access experience for the user, good Wi-Fi Internet access experience can be provided for the user through roaming. A Wi-Fi chip generally includes a plurality of Wi-Fi roaming policies. Different chip manufacturers may preconfigure same or different Wi-Fi roaming policies in Wi-Fi chips of the chip manufacturers.

For example, the Wi-Fi roaming policies configured in the Wi-Fi chip may include: a bit error rate is less than a threshold, a priority of a first band (for example, a 5G band) is higher than a priority of a second band (for example, a 2.4G band), acknowledge characters (ACK) replied by a network device (such as a router) are not received, load (BSS LOAD, such as channel occupation) is greater than a threshold, an amount of transmitted data reaches a threshold, a transmission rate is less than a threshold, a beacon (BEACON) frame of the network device (such as the router) is not received, a signal of a connected Wi-Fi network is less than a threshold, and a Wi-Fi network to which the electronic device is actively reconnected receives a passive (DEAUTH) instruction.

The bit error rate is used to evaluate signal receiving performance of the electronic device. When the signal receiving performance does not reach an acceptable percentage, that is, the bit error rate is greater than the threshold, it may be considered that the signal of the currently connected Wi-Fi network is poor, and Internet access experience of the user can be enhanced through Wi-Fi roaming. A dual-band unified router may be deployed. For example, a router that supports both the 5G band and the 2.4G band is deployed in the current scenario. The router has two BSSIDs: a BSSID 1 and a BSSID 2, which respectively correspond to the 5G band and the 2.4G band that are supported by the router, and the foregoing threshold is 2.5%. For example, the current electronic device selects the BSSID 1 to access the Wi-Fi network. When the electronic device detects that the current bit error rate exceeds 2.5%, the electronic device may switch from the BSSID 1 to the BSSID 2, namely, Wi-Fi roaming occurs.

That the priority of the first band is higher than the priority of the second band means that in the process of accessing a Wi-Fi network, the electronic device preferentially selects a Wi-Fi network of the first band. For example, the electronic device preferentially selects the BSSID corresponding to the 5G band, to access the Wi-Fi network. Correspondingly, when accessing the Wi-Fi network through the BSSID corresponding to the second band, for example, 2.4G band, the electronic device may perform Wi-Fi roaming, to switch to the BSSID corresponding to the 5G band, to access the Wi-Fi network.

The acknowledge character (ACKnowledge Character, ACK) means that in a process of interaction between the electronic device and the network device (such as the router), the router replies with ACK. If the electronic device does not continuously receive the ACK, the electronic device performs Wi-Fi roaming.

Similarly, when other Wi-Fi roaming policies are satisfied, the electronic device also performs Wi-Fi roaming, to ensure Internet access experience of the user.

In this embodiment, the electronic device, for example, the processor of the electronic device, may obtain, from the Wi-Fi chip, the Wi-Fi roaming policies configured by the electronic device.

S302: The electronic device divides the plurality of Wi-Fi roaming policies obtained in S301 into a first roaming policy and a second roaming policy.

After obtaining the plurality of Wi-Fi roaming policies preconfigured in the Wi-Fi chip, the electronic device, for example, the processor of the electronic device, may divide the plurality of Wi-Fi roaming policies into the first roaming policy and the second roaming policy. For example, the plurality of Wi-Fi roaming policies may be classified according to a principle that normal use of the Wi-Fi network is not affected. For example, the first roaming policy may be a roaming policy for optimizing a network, and the second roaming policy may be a roaming policy for keeping a connection. To be specific, when the first roaming policy is forbidden, normal use of the Wi-Fi network is not affected.

It should be noted that the foregoing principle may alternatively be another division principle. This is not specifically limited herein. For example, it only needs to be ensured that the first roaming policy is some roaming policies in the plurality of Wi-Fi roaming policies supported by the electronic device.

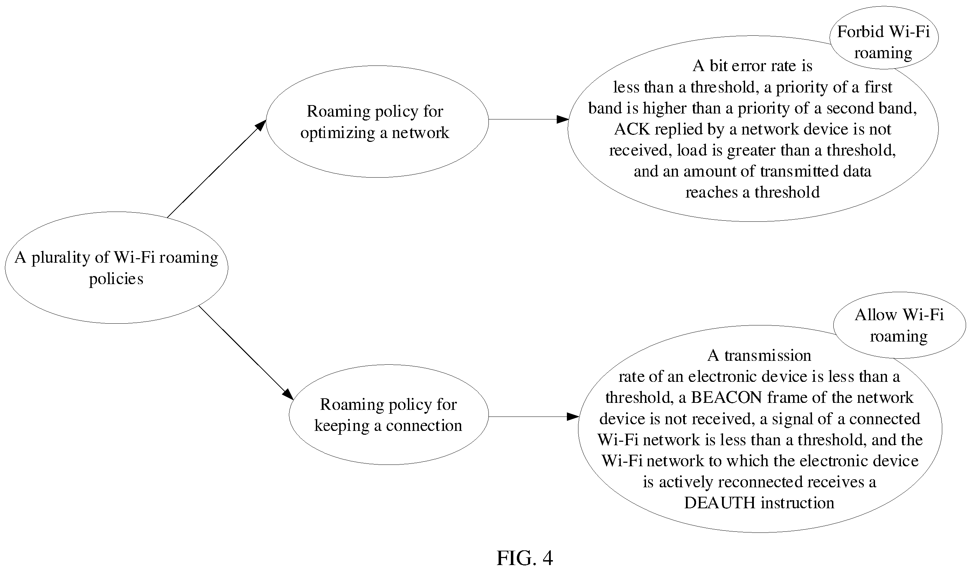

For example, as shown in FIG. 4, with reference to the example in S301, the first roaming policy may include one or more of the following policies: a bit error rate is less than a threshold, a priority of a first band is higher than a priority of a second band, ACK replied by a network device are not received, load is greater than a threshold, and an amount of transmitted data reaches a threshold. The second roaming policy may include one or more of the following policies: a transmission rate of the electronic device is less than a threshold, a BEACON frame of the network device is not received, a signal of the connected Wi-Fi network is less than a threshold, and the Wi-Fi network to which the electronic device is actively reconnected receives a DEAUTH instruction.

S303: The electronic device performs Wi-Fi roaming between two different BSSIDs.

As described above, in a scenario in which a dual-band unified router is deployed or in a scenario in which two single-band routers are deployed, if two different BSSIDs correspond to a same Wi-Fi network or if names and passwords of Wi-Fi networks corresponding to two different BSSIDs are the same, to ensure that the electronic device provides a normal Internet access function for the user, the electronic device may periodically monitor the currently connected Wi-Fi network. For example, based on the Wi-Fi roaming policies configured by the electronic device, the electronic device determines whether Wi-Fi roaming needs to be performed, that is, whether Wi-Fi roaming needs to occur between two different BSSIDs.

For example, the Wi-Fi chip of the electronic device may decide, based on the Wi-Fi roaming policies, whether Wi-Fi roaming needs to occur between two different BSSIDs. When the Wi-Fi chip decides that Wi-Fi roaming needs to be performed, the Wi-Fi chip may switch from one BSSID to the other BSSID. In addition, the Wi-Fi chip may further report the event of Wi-Fi roaming to the processor of the electronic device.

When the electronic device, such as the processor of the electronic device, monitors that the electronic device performs Wi-Fi roaming between two different BSSIDs, further, the electronic device, such as the processor of the electronic device may determine whether an escape policy needs to be executed in the current scenario. For example, the escape policy may be executed when it is determined that the Wi-Fi roaming performed meets a preset condition. Specifically, the following steps S304 and S305 may be performed.

S304: In response to that Wi-Fi roaming performed by the electronic device meets the preset condition, the electronic device obtains first escape duration.

When it is determined that the electronic device performs Wi-Fi roaming between two different BSSIDs, the electronic device may further determine whether Wi-Fi roaming performed by the electronic device meets the preset condition. When Wi-Fi roaming performed by the electronic device meets the preset condition, it may be considered that the electronic device is in a Wi-Fi roaming ping-pong scenario.

In an example, the preset condition may include one or more in the foregoing conditions: a quantity of times of Wi-Fi roaming performed by the electronic device between the two different BSSIDs is greater than a third threshold; and a time difference between first Wi-Fi roaming and last Wi-Fi roaming is less than a fourth threshold. In other words, when Wi-Fi roaming performed by the electronic device between the two different BSSIDs meets the foregoing preset condition, it may be considered that the electronic device is in a Wi-Fi roaming ping-pong scenario in which Internet access experience of the user is affected.

The third threshold may be an integer greater than 1, for example, 3, 5, or 6. For example, the fourth threshold may be 2 minutes, 75 seconds, 1 minute, 30 seconds, or the like.

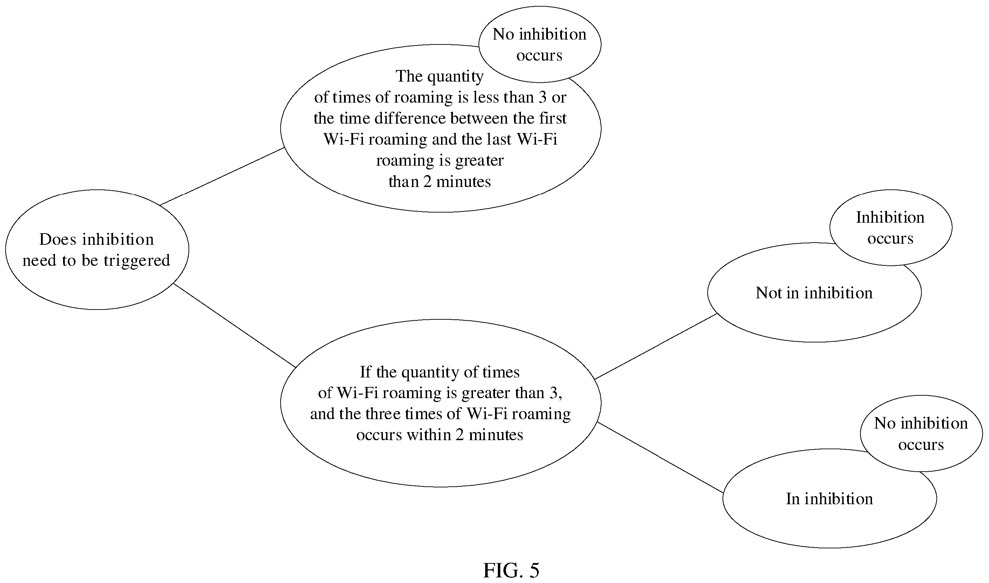

For example, as shown in FIG. 5, an example in which the foregoing preset condition includes: a quantity of times of Wi-Fi roaming is greater than a third threshold; and a time difference between first Wi-Fi roaming and last Wi-Fi roaming is less than a fourth threshold, where the third threshold is 3, and the fourth threshold is 2 minutes is used. When it is determined that the electronic device performs Wi-Fi roaming between two different BSSIDs, the electronic device such as the processor of the electronic device may determine whether the quantity of times of Wi-Fi roaming between the two different BSSIDs is greater than 3, and whether the time difference between the first Wi-Fi roaming and the last Wi-Fi roaming is less than 2 minutes, that is, determine whether the electronic device frequently performs Wi-Fi roaming between the two different BSSIDs within two minutes. If the quantity of times of Wi-Fi roaming is greater than 3, and the three times of Wi-Fi roaming occur within 2 minutes, it indicates that the electronic device is in a Wi-Fi roaming ping-pong scenario and inhibition needs to be triggered, that is, the escape policy needs to be executed. If the quantity of times of roaming is less than 3 or the time difference between the first Wi-Fi roaming and the last Wi-Fi roaming is greater than 2 minutes, it indicates that the electronic device is not in a Wi-Fi roaming ping-pong scenario and inhibition does not need to be triggered, that is, the escape policy does not need to be executed.

After it is determined that the Wi-Fi roaming performed by the electronic device meets the preset condition, that is, the electronic device is in the Wi-Fi roaming ping-pong scenario, the electronic device such as the processor of the electronic device may execute the escape policy, to reduce the occurrence frequency of Wi-Fi roaming. For example, after the Wi-Fi roaming ping-pong scenario occurs, the electronic device may restrict the occurrence frequency of Wi-Fi roaming by executing the escape policy within specific duration (for example, escape duration), to ensure properness.

The foregoing escape duration may be the first escape duration in this embodiment of this application.

In some embodiments of this application, the first escape duration may be determined based on historical escape related information. Specifically, a manner of determining the first escape duration is as follows: The electronic device, for example, the processor of the electronic device, may obtain the historical escape information, and then determine the first escape duration based on the historical escape information. The historical escape information may include: a reason why execution of the escape policy is stopped last time and/or a timestamp at which execution of the escape policy is stopped last time.

The reason why execution of the escape policy is stopped last time may include normal stop and abnormal stop. When the reason why execution of the escape policy is stopped last time is that the second escape duration expires, it may be considered that the stop reason is normal stop. When the reason why execution of the escape policy is stopped last time is that the second escape duration does expire and an abnormal event is detected, it may be considered that the stop reason is abnormal stop. The second escape duration is duration in which the escape policy is executed last time. The timestamp at which execution of the escape policy is stopped last time may be a specific time at which execution of the escape policy is stopped last time.

When the historical escape information is different, escape duration at this time, namely, the first escape duration, is different. In other words, the escape duration at this time may be selected step by step based on the historical escape information.

For example, the historical escape information includes the reason why execution of the escape policy is stopped last time and the timestamp. When the reason why execution of the escape policy is stopped last time is that second escape duration expires, namely, normal stop, and a time difference between the timestamp at which execution of the escape policy is stopped last time and a current moment is less than a second threshold, the first escape duration may be determined as the first duration. When the reason why execution of the escape policy is stopped last time is that the second escape duration expires (namely, normal stop), and the time difference between the timestamp at which execution of the escape policy is stopped last time and the current moment is greater than the second threshold, or when the reason why execution of the escape policy is stopped last time is that an abnormal event (namely, abnormal stop) is detected, the first escape duration may be determined as second duration.

The first duration is greater than the second duration. For example, the first duration may be 30 minutes, 25 minutes, 20 minutes, or the like. The second duration may be 5 minutes, 3 minutes, or the like. The second threshold may be 1 hour, 1.5 hours, 2 hours, or the like.

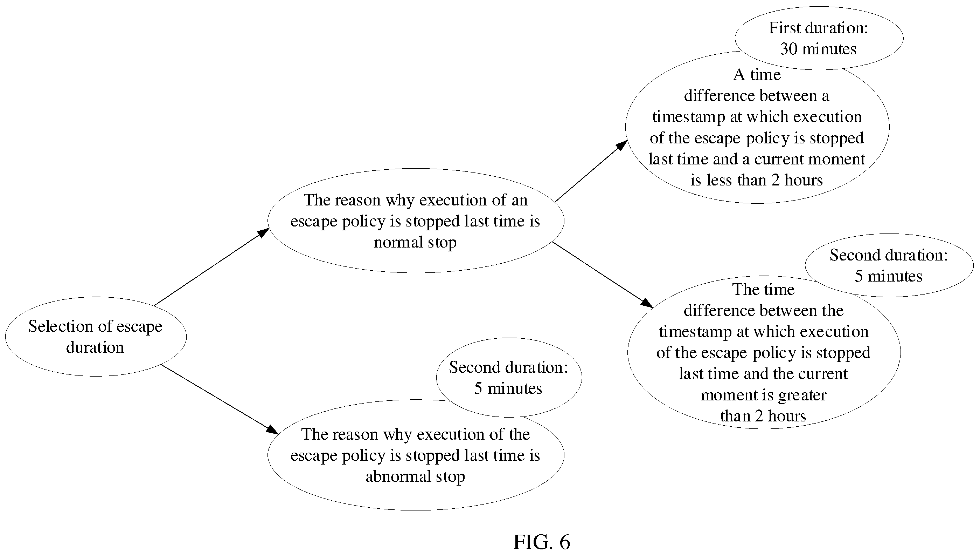

For example, as shown in FIG. 6, an example in which the historical escape information includes: the reason why execution of the escape policy is stopped last time and the timestamp at which execution of the escape policy is stopped last time, where the second threshold is 2 hours, the first duration is 30 minutes, and the second duration is 5 minutes is used. When the reason why execution of the escape policy is stopped last time is normal stop, and the time difference between the timestamp at which execution of the escape policy is stopped last time and the current moment is less than 2 hours, the first escape duration may be determined as 30 minutes. When the reason why execution of the escape policy is stopped last time is normal stop, and the time difference between the timestamp at which execution of the escape policy is stopped last time and the current moment is greater than two hours, or when the reason why execution of the escape policy is stopped last time is abnormal stop, the first escape duration is determined as 5 minutes.

After the escape duration at this time, namely, the first escape duration is determined, the electronic device may trigger inhibition, for example, perform the following S305.

S305: The electronic device executes the escape policy within the first escape duration.

The escape policy may include: forbidding the electronic device from performing Wi-Fi roaming based on the first roaming policy obtained through division in S302. The escape policy may further include: skipping responding to a received switching request caused by a preset reason; and the preset reason includes: BTM.

A specific implementation of executing the escape policy, namely, forbidding the electronic device from performing Wi-Fi roaming based on the first roaming policy may be labeling the first roaming policy, where the label indicates forbidding using the roaming policy. In this way, when the electronic device is connected to a Wi-Fi network, the electronic device decides, only by using an unlabeled Wi-Fi roaming policy, whether Wi-Fi roaming needs to be triggered. In other words, the electronic device decides, only based on the second roaming policy, whether Wi-Fi roaming needs to be triggered, to reduce frequency of Wi-Fi roaming and also ensure Internet access experience of the user. A specific implementation of executing the escape policy may alternatively be adding the first roaming policy to a blacklist. In this way, when the electronic device is connected to the Wi-Fi network, the electronic device may decide, based on a Wi-Fi roaming policy that has not been added to the blacklist, whether Wi-Fi roaming needs to be triggered. Alternatively, the second roaming policy may be added to a whitelist. In this way, when the electronic device is connected to the Wi-Fi network, the electronic device may decide, based on the Wi-Fi roaming policy added to the whitelist, whether Wi-Fi roaming needs to be triggered.

Transition management (Bss Transition-management, BTM) is guided by a router. BTM means that the router triggers the need for Wi-Fi roaming on the electronic device. For example, in terms of load balance, load balance means that when Wi-Fi network congestion occurs on one BSSID, the router sends a switching request caused by a load balance policy to the electronic device. In this case, during execution of the escape policy, the electronic device may not respond to the received switching request.

For example, the escape policy includes forbidding the electronic device from performing Wi-Fi roaming based on the first roaming policy and skipping responding to a switching request caused by a preset reason, where the first escape duration is 30 minutes. Within the first escape duration, for example, 30 minutes, the electronic device decides, only based on the second roaming policy, whether Wi-Fi roaming needs to be triggered. In addition, within the first escape duration, for example, 30 minutes, the electronic device does not respond to the switching request caused by the preset reason, to forbid Wi-Fi roaming.

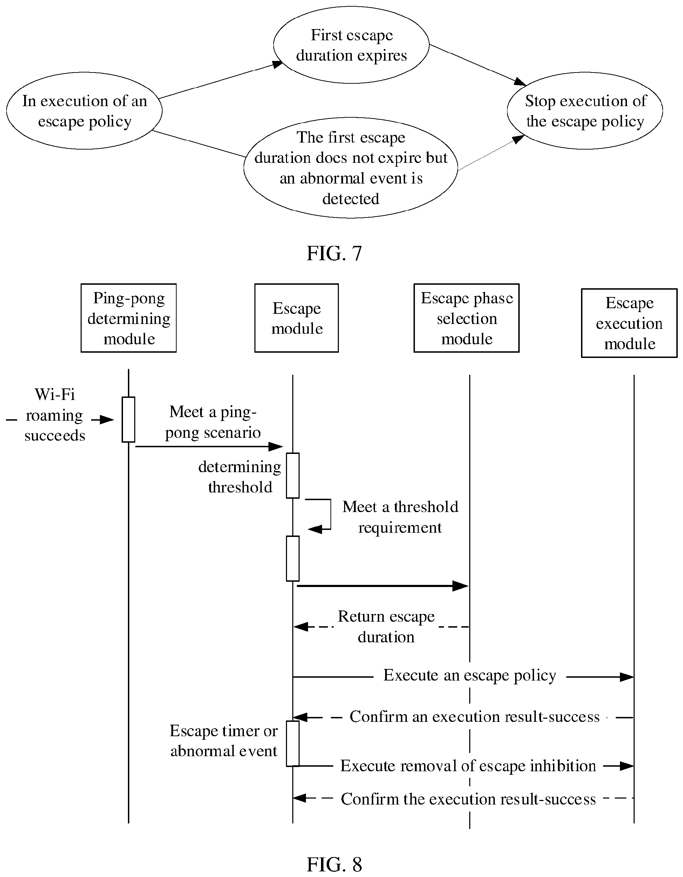

When the condition for stopping execution of the escape policy is met, the electronic device may stop execution of the escape policy. In some examples, the condition for stopping execution of the escape policy may be that the first escape duration expires. In other words, with reference to FIG. 7, after the first escape duration expires, the electronic device such as the processor of the electronic device may stop execution of the escape policy, that is, recover use of the first roaming policy as a condition for deciding whether Wi-Fi roaming needs to be performed, and/or allow to respond to the switching request caused by the preset reason.

For example, using an example in which the first escape duration is the first duration and the first duration is 30 minutes, after 30 minutes for inhibition execution expires, execution of the escape policy is stopped.

In some other examples, the condition for stopping execution of the escape policy may alternatively be that the first escape duration does not expire but an abnormal event is detected. In other words, in a case in which the first escape duration does not expire but an abnormal event is detected, the electronic device such as the processor of the electronic device may stop execution of the escape policy. For example, the abnormal event may be that the electronic device disconnects a Wi-Fi connection, and signal quality of the Wi-Fi network to which the electronic device is connected is continuously less than a first threshold in preset duration.

It should be noted that the foregoing S301 and S302 may be performed after it is determined that the Wi-Fi roaming ping-pong scenario occurs, or may be performed before it is determined that the Wi-Fi roaming ping-pong scenario occurs. This is not specifically limited herein.

In the technical solution of this application, when it is determined that the electronic device performs Wi-Fi roaming between two different BSSIDs and meets the preset condition, namely, the electronic device is currently in the Wi-Fi roaming ping-pong scenario, the occurrence frequency of Wi-Fi roaming is reduced by forbidding some roaming policies. This implements escape from the Wi-Fi roaming ping-pong scenario, thereby ensuring Internet access experience of the user. In addition, the escape policy may be executed in the escape duration, and when the escape duration expires or an abnormal event occurs, the inhibited roaming policies are restored. This ensures normal triggering of subsequent Wi-Fi roaming and further enhances Internet access experience of the user. Selecting the escape duration at this time step by step makes inhibition more proper, and further ensures Internet access experience of the user.

The following describes, with reference to FIG. 8 by using an example in which the electronic device includes a ping-pong determining module, an escape module, an escape phase selection module, and an escape execution module, the method for controlling Wi-Fi roaming provided in this embodiment of this application.

When Wi-Fi roaming succeeds, namely, the electronic device switches from one BSSID to the other BSSID, the ping-pong escape module may receive an instruction that Wi-Fi roaming succeeds. In response, the ping-pong determining module may determine the current scenario, namely, recognize whether the current scenario is a ping-pong scenario. For example, the ping-pong determining module may determine whether frequent switching back and forth is performed between two BSSIDs and whether the quantity of times of switching meets a particular quantity (for example, the third threshold, for example, 5). When the current scenario is recognized as the ping-pong scenario, the ping-pong determining module sends information that the current scenario is recognized as the ping-pong scenario to the escape module. Then, the escape module may further determine a time threshold, that is, the escape module may determine whether the ping-pong scenario occurs within preset time, for example, whether the ping-pong scenario occurs within 2 minutes. When the ping-pong scenario is met and the threshold requirement is met, the current scenario is recognized as the Wi-Fi roaming ping-pong scenario. When determining that the current scenario is the Wi-Fi roaming ping-pong scenario, the escape module obtains escape duration from the escape phase selection module. For example, the escape module may send a request message to the escape phase selection module. After receiving the request message, the escape phase selection module may select escape duration at this time based on the historical escape information. After determining the escape duration at this time, the escape phase selection module may return the escape duration to the escape module. Then, the escape module may trigger the escape execution module to execute the escape policy. When the escape execution module confirms successfully starting to execute the escape policy, the escape execution module may return an execution confirmation result that the execution result is success to the escape module, so that the escape module sets an escape timer at this time on this basis, and starts to monitor an abnormal event. When the set escape timer expires or an abnormal event occurs, the escape module may trigger the escape execution module to stop executing the escape policy, or trigger the escape execution module to remove escape inhibition. After successfully stopping escape inhibition, the escape execution module may further return an execution result of confirming successfully stopping escape inhibition to the escape module. Then, all the roaming policies are recovered.

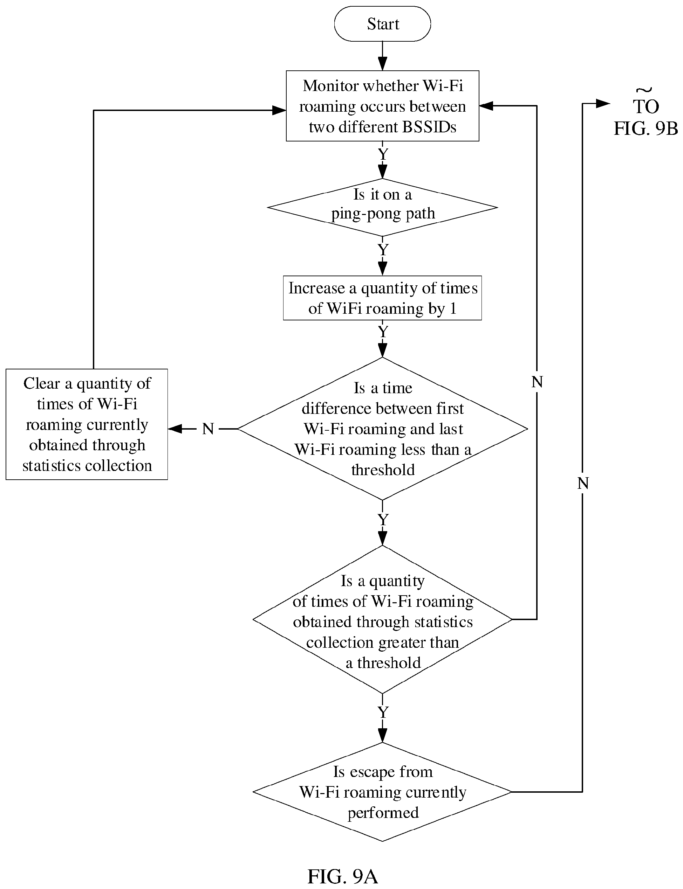

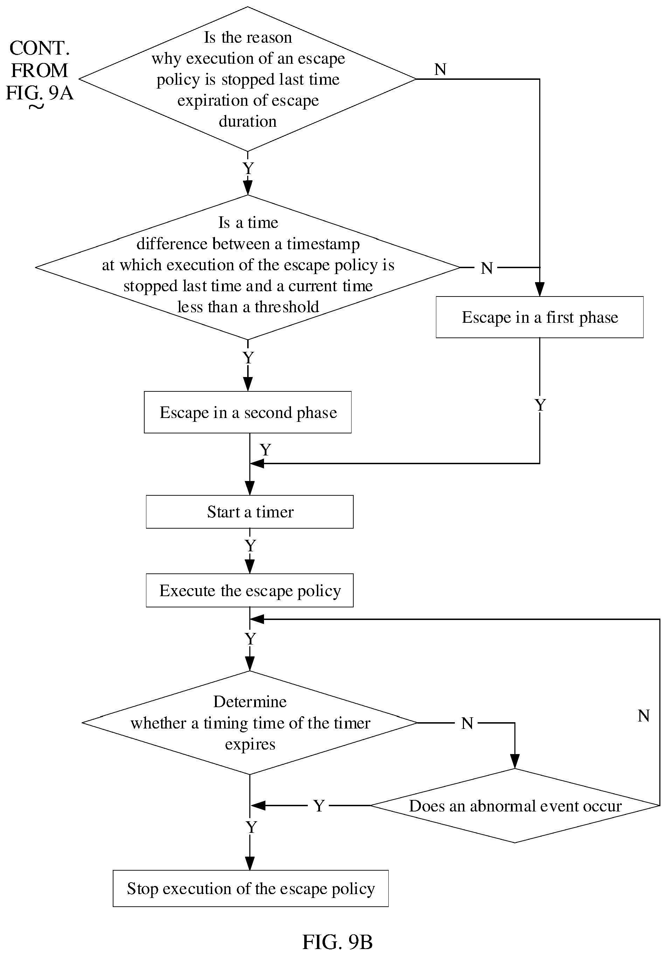

The following describes, with reference to FIG. 9A and FIG. 9B by using examples, the method for controlling Wi-Fi roaming provided in embodiments of this application.

As shown in FIG. 9A and FIG. 9B, the electronic device monitors whether Wi-Fi roaming occurs between two different BSSIDs. If Wi-Fi roaming between two different BSSIDs is detected, whether the electronic device is on a ping-pong path, or whether the electronic device has switched from the current BSSID back to the previous BSSID is determined. When it is determined that the electronic device is not on the ping-pong path, whether Wi-Fi roaming occurs between two different BSSIDs continues to be monitored.

When it is determined that the electronic device is on the ping-pong path, the quantity of times of Wi-Fi roaming may be increased by 1. It may be understood that, based on the monitoring result from the first step and the determining result from the second step, the electronic device may collect statistics in the quantity of times of switching back and forth between the two different BSSIDs, namely, the quantity of times of Wi-Fi roaming.

After obtaining the quantity of times of Wi-Fi roaming through statistics collection, the electronic device may continue to determine whether the time difference between the first Wi-Fi roaming and the last Wi-Fi roaming is less than a threshold, for example, 2 minutes. If the time difference between the first Wi-Fi roaming and the last Wi-Fi roaming is greater than the threshold, the electronic device may clear the quantity of times of Wi-Fi roaming currently obtained through statistics collection, and performs a monitoring operation again.

If the time difference between the first Wi-Fi roaming and the last Wi-Fi roaming is less than the threshold, the electronic device continues to determine whether the quantity of times of Wi-Fi roaming obtained through statistics collection is greater than a threshold, for example, 5. If the quantity of times of Wi-Fi roaming is less than the threshold, the electronic device may clear the quantity of times of Wi-Fi roaming currently obtained through statistics collection, and performs a monitoring operation again.

If the quantity of times of Wi-Fi roaming is greater than the threshold, whether escape from Wi-Fi roaming is currently performed, namely, whether the escape policy is currently executed is determined. When escape from Wi-Fi roaming is currently performed, a monitoring operation may be performed again.

When escape from Wi-Fi roaming is not currently performed, the electronic device may continue to determine whether the reason why execution of the escape policy is stopped last time is that escape duration expires, that is, whether escape is stopped last time after normal timing ends.

If the reason why execution of the escape policy is stopped last time is not that escape duration expires, escape in a first phase is performed, that is, escape duration at this time is selected as the first duration, such as 30 minutes. If the reason why execution of the escape policy is stopped last time is that escape duration expires, whether the time difference between the timestamp at which execution of the escape policy is stopped last time and the current time is less than the threshold, for example, 2 hours continues to be determined. When the time difference between the timestamp at which execution of the escape policy is stopped last time and the current time is greater than the threshold, escape in the first phase is also performed, that is, escape duration at this time is selected as the first duration, such as 30 minutes. When the time difference between the timestamp at which execution of the escape policy is stopped last time and the current time is less than the threshold, escape in a second phase is performed, that is, escape duration at this time is selected as the second duration, such as 5 minutes.

Then, the electronic device may set a timer based on the first duration or the second duration, and start the timer. When the timer is started, the escape policy is executed, for example, the electronic device is forbidden from performing Wi-Fi roaming based on the first roaming policy. In addition, the electronic device may determine whether timing time of the timer expires. When the timer does not expire, the electronic device may further detect whether an abnormal event occurs. When the timer expires, or when the timer does not expire but an abnormal event is detected, execution of the escape policy is stopped.

Some other embodiments of this application provide a computer device. The computer device may be the foregoing electronic device, for example, may include a memory, a wireless communication module, and one or more processors. The memory, the wireless communication module, and the processor are coupled to each other. The memory is configured to store the computer instructions. When the processor executes the computer instructions, the electronic device may perform the functions or the steps performed in the foregoing method embodiments. For the structure of the electronic device, refer to the structure of the electronic device shown in FIG. 2 that uses a mobile phone as an example.

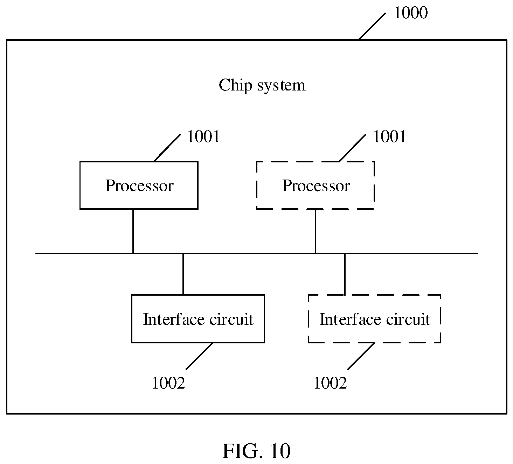

An embodiment of this application further provides a chip system. As shown in FIG. 10, the chip system 1000 includes at least one processor 1001 and at least one interface circuit 1002. The processor 1001 and the interface circuit 1002 may be interconnected through a line. For example, the interface circuit 1002 may receive a signal from another apparatus (for example, a memory of an electronic device). For another example, the interface circuit 1002 may be configured to send a signal to another apparatus (for example, the processor 1001). For example, the interface circuit 1002 may read instructions stored in the memory and send the instructions to the processor 1001. When the instructions are executed by the processor 1001, the electronic device can be enabled to perform the steps in the foregoing embodiments. It is clear that the chip system may further include another discrete device. This is not specifically limited in this embodiment of this application.

An embodiment of this application further provides a computer storage medium. The computer storage medium includes computer instructions. When the computer instructions are run on the foregoing electronic device, the electronic device is enabled to perform the functions or steps performed by the electronic device in the foregoing method embodiments.

An embodiment of this application further provides a computer program product. When the computer program product is run on a computer, the computer is enabled to perform the functions or steps performed by the electronic device in the foregoing method embodiments.

Based on the descriptions of the foregoing implementations, a person skilled in the art may clearly understand that, for a purpose of convenient and brief description, division into the foregoing functional modules is used as an example for illustration. In actual application, the foregoing functions may be allocated to different functional modules and completed based on requirements. In other words, an inner structure of an apparatus is divided into different functional modules to complete all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for controlling Wi-Fi roaming, wherein the method is applied to an electronic device supporting a plurality of Wi-Fi roaming policies, the electronic device is connected to a Wi-Fi network, and the method comprises:
performing, by the electronic device, Wi-Fi roaming between two different basic service set identifiers BSSIDs; and
executing an escape policy in response to that Wi-Fi roaming performed by the electronic device meets a preset condition, wherein
the escape policy comprises forbidding the electronic device from performing Wi-Fi roaming based on a first roaming policy, wherein the first roaming policy comprises some roaming policies in the plurality of Wi-Fi roaming policies supported by the electronic device.

2. The method according to claim 1, wherein executing the escape policy comprises:
executing the escape policy in first escape duration.

3. The method according to claim 2, wherein the method further comprises:
stopping executing the escape policy after the first escape duration expires; or when the first escape duration does not expire but an abnormal event is detected, stopping executing the escape policy, wherein the abnormal event comprises one or more of the following events: the electronic device disconnects a Wi-Fi connection and signal quality of the Wi-Fi network to which the electronic device is connected is continuously less than a first threshold in preset duration; and
when execution of the escape policy is stopped, allowing the electronic device to perform Wi-Fi roaming based on the first roaming policy.

4. The method according to claim 2 or 3, wherein the method further comprises:
obtaining historical escape information, wherein the historical escape information comprises: a reason why execution of the escape policy is stopped last time and/or a timestamp at which execution of the escape policy is stopped last time; and
obtaining the first escape duration based on the historical escape information.

5. The method according to claim 4, wherein when the reason why execution of the escape policy is stopped last time is that second escape duration expires, and a time difference between the timestamp at which execution of the escape policy is stopped last time and a current moment is less than a second threshold, the first escape duration is first duration; or
when the reason why execution of the escape policy is stopped last time is that the second escape duration expires, and the time difference between the timestamp at which execution of the escape policy is stopped last time and the current moment is greater than the second threshold, or when the reason why execution of the escape policy is stopped last time is that the abnormal event is detected, the first escape duration is second duration, wherein
the second escape duration is duration in which the escape policy is executed last time, and the first duration is greater than the second duration.

6. The method according to claim 1, wherein the preset condition comprises one or more of the following conditions:
a quantity of times of Wi-Fi roaming is greater than a third threshold; and
a time difference between first Wi-Fi roaming and last Wi-Fi roaming is less than a fourth threshold.

7. The method according to any one of claims 1 to 6, wherein before the escape policy is executed, the method further comprises:
obtaining the plurality of Wi-Fi roaming policies; and
dividing the plurality of Wi-Fi roaming policies into the first roaming policy and a second roaming policy, wherein
the second roaming policy is a roaming policy, other than the first roaming policy, in the plurality of Wi-Fi roaming policies, and when Wi-Fi roaming that occurs on the electronic device meets the preset condition, the electronic device is allowed to perform Wi-Fi roaming based on the second roaming policy.

8. The method according to claim 7, wherein the first roaming policy comprises one or more of the following policies: a bit error rate is less than a threshold, a priority of a first band is higher than a priority of a second band, acknowledge characters ACK replied by a network device are not continuously received, load is greater than a threshold, and an amount of transmitted data reaching a threshold; and
the second roaming policy comprises one or more of the following policies: a transmission rate is less than a threshold, a beacon (BEACON) frame of the network device is not received, a signal of the connected Wi-Fi network is less than a threshold, and the Wi-Fi network to which the electronic device is actively reconnected receiving a passive DEAUTH instruction.

9. The method according to any one of claims 1 to 8, wherein the escape policy further comprises: skipping responding to a received switching request caused by a preset reason; and the preset reason comprises: transition management BTM.

10. A computer device, comprising: a memory, a processor, a wireless communication module, and computer instructions stored in the memory, wherein the memory executes the computer instructions to implement the steps of the method according to any one of claims 1 to 9.

11. A computer-readable storage medium, storing computer instructions, wherein
when the computer instructions are executed by a processor, the steps of the method according to any one of claims 1 to 9 are implemented.

12. A computer program product, comprising computer instructions, wherein when the computer instructions are executed by a processor, the steps of the method according to any one of claims 1 to 9 are implemented.
